# EUROPÄISCHE PATENTANMELDUNG

(11) **EP 2 110 595 A1**
(43) Veröffentlichungstag der Anmeldung: **21.10.2009**
(21) Anmeldenummer: 08007304.2
(22) Anmeldetag: 14.04.2008
(51) Int. Cl.: F16M 11/10, F16M 11/16, F16C 11/10, G07G 1/00

(54) **Terminalständer mit schwenkbarem Gelenk**

(71) Anmelder: Hypercom GmbH, 36251 Bad Hersfeld (DE)
(72) Erfinder: Hoppe, Horst, 31188 Holle (DE); Stolle, Dieter, 31162 Bad Salzdetfurth (DE)
(74) Vertreter: Maiwald Patentanwalts GmbH

(57) **Zusammenfassung**

Es wird ein Terminalständer (1) vorgeschlagen, bei dem eine Halteeinrichtung (5) über ein Gelenk (7) relativ zu einer Befestigungseinrichtung (3) verschwenkt werden kann, wobei Feststelleinrichtungen (51), die in einem Ansatzstück (40) an der Halteeinrichtung (5) angeordnet sind, elastisch federnd in Ausnehmungen (63) in einem an der Befestigungseinrichtung (3) angebrachten Ansatzstück (71, 73) eingreifen und so das Gelenk (7) in vorbestimmten Feststellpositionen fixieren.

## Beschreibung

Die vorliegende Erfindung betrifft einen Terminalständer mit einem schwenkbaren Gelenk, das in verschiedenen Positionen fixierbar ist.

Unter einem Terminalständer kann eine Vorrichtung verstanden werden, die an einem Ende eine Halteeinrichtung aufweist, die dazu ausgelegt, einen kleinen Gegenstand wie z.B. ein elektrisches Gerät zu halten, und die an einem anderen Ende eine Befestigungsvorrichtung aufweist, die dazu ausgelegt ist, an einem großen Gegenstand wie z.B. einem Möbel befestigt zu werden. Zum Beispiel werden Terminalständer dazu verwendet, Bezahlterminals an Kassen eines Supermarktes zu installieren. Das Bezahlterminal kann dazu verwendet werden, bargeldlos z.B. mittels einer Scheckkarte Ware zu bezahlen, wobei zur Authentifizierung z.B. eine Geheimnummer in das Bezahlterminal eingegeben werden muss.

Damit das an der Halteeinrichtung gehaltene Gerät einfach und komfortabel von verschiedenen Personen unterschiedlicher Größe bedient werden kann, sollte die Halteeinrichtung in Bezug auf die Befestigungseinrichtung verschwenkbar sein. Unter "schwenken" sei hierbei vorzugsweise eine Bewegung um eine Achse verstanden, die quer zu der Haupterstreckungsrichtung zwischen dem z.B. an dem Möbel befestigten Ende und dem das Gerät haltenden Ende des Terminalständers verläuft. Außerdem ist es vorteilhaft, wenn die Halteeinrichtung auch um diese Haupterstreckungsrichtung des Terminalständers herum verdrehbar ist. Am Beispiel des Bezahlterminals an der Supermarktkasse kann eine sitzende Verkäuferin dann zunächst das Bezahlterminal zu sich drehen und schwenken, es initialisieren und es anschließend zu dem stehenden Kunden hin drehen und schwenken. Dabei sollte der Terminalständer so ausgelegt sein, dass eine einmal eingenommene Position der Halteeinrichtung sich ohne Krafteinwirkung von außen nicht ändert.

Es sind herkömmliche Terminalständer bekannt, die zwischen der Halteeinrichtung und der Befestigungseinrichtung ein schwenkbares Gelenk aufweisen. Das Gelenk ist dabei so ausgelegt, dass eine gewisse Reibung innerhalb des Gelenks überwunden werden muss, um es zu bewegen. Die Reibung ist so groß, dass die Halteeinrichtung ohne Krafteinwirkung von außen ihre Position hält.

Bei einem bekannten herkömmlichen Terminalständer ist die Befestigungseinrichtung als Rohr ausgebildet, dass über einen Flansch an einer Kasse befestigt werden kann. An dem dem Flansch entgegen gesetzten Ende des Rohrs sind an gegenüber liegenden Seiten des Rohres zwei Ansatzstücke an das Rohr angeschweißt. An der Halteinrichtung ist ebenfalls ein Ansatzstück angeschweißt. Alle drei Ansatzstücke haben ein Durchgangsloch. Das Ansatzstück der Halteeinrichtung wird zwischen den beiden Ansatzstücken der Befestigungseinrichtung angeordnet und durch die drei nun miteinander ausgerichteten Durchgangslöcher wird eine Schraube geführt. Wenn die Schraube angezogen wird, werden die aneinander anliegenden Seitenflächen der drei Ansatzstücke gegeneinander gepresst. Aufgrund der dadurch entstehenden Reibung verharrt das Schwenkgelenk solange in einer einmal eingestellten Position, bis es eine äußere Kraft erfährt, die groß genug ist, um die Haftreibung zu überwinden.

Bei solchen herkömmlichen Terminalständern wird die Kraft zum Halten der Position der Halteeinrichtung ausschließlich durch Reibungskräfte erzeugt. Die Reibungskräfte werden durch die von der Schraube bewirkten seitlichen Kräfte induziert. Alternativ kann die Reibung auch dadurch erzeugt werden, dass das Ansatzstück der Halteeinrichtung bereits unter Vorspannung zwischen die Ansatzstücke der Befestigungseinrichtung geklemmt wird. Wenn die zur Erzeugung der Reibung nötigen Seitenkräfte nachlassen, z.B. durch sukzessives Lockern der Schraube oder durch Ermüdungserscheinungen der die Ansatzstücke haltenden Strukturen, verringert sich die die Position der Halteeinrichtung fixierende Haftreibung und der Terminalständer droht sich von allein zu verstellen. Daher muss der Terminalständer regelmäßig gewartet werden und gegebenenfalls die Schraube durch das Gelenk nachgespannt werden. Solche Wartung stellt einen Arbeits- und Kostenaufwand dar.

Es ist eine Aufgabe der vorliegenden Erfindung, einen Terminalständer bereitzustellen, bei dem insbesondere die genannten Probleme gelöst sind. Insbesondere soll der Terminalständer eine einmal eingestellte Feststellposition zuverlässig halten, weitgehend verschleißfrei sein und somit die Notwendigkeit häufiger Wartung vermeiden.

Diese Aufgabe wird durch einen Terminalständer gemäß dem Hauptanspruch gelöst. Merkmale von vorteilhaften Ausführungsformen sind in den Unteransprüchen beschrieben.

Gemäß einem Aspekt der vorliegenden Erfindung ist ein Terminalständer vorgesehen, der eine Halteeinrichtung, eine Befestigungseinrichtung und ein Gelenk aufweist. Das Gelenk weist mindestens ein an der Halteeinrichtung befestigtes Halteeinrichtungsansatzstück und mindestens ein an der Befestigungseinrichtung befestigtes Befestigungseinrichtungsansatzstück auf. Durch das Halteeinrichtungsansatzstück und das Befestigungseinrichtungsansatzstück erstreckt sich eine Schwenkachse, um die das Halteeinrichtungsansatzstück relativ zu dem Befestigungseinrichtungsansatzstück schwenkbar ist. In dem Halteeinrichtungsansatzstück ist mindestens eine Feststelleinrichtung vorgesehen, bei der ein parallel zu der Schwenkachse verlagerbarer Vorsprung durch ein elastisches Element in Richtung auf das Befestigungseinrichtungsansatzstück vorgespannt ist. Das Befestigungseinrichtungsansatzstück weist mindestens eine Ausnehmung auf, die derart ausgebildet ist, dass der Vorsprung der Feststelleinrichtung in die Ausnehmung eingreift, wenn das Gelenk in einer Feststellposition ist.

Im Folgenden werden Merkmale und Eigenschaften des erfindungsgemäßen Terminalständers bzw. von vorteilhaften Ausführungsformen detailliert erläutert.

Die Halteeinrichtung kann dazu ausgelegt sein, ein Gerät wie z.B. ein Bezahlterminal zu halten. Das Gerät kann dabei lose auf der Halteeinrichtung aufliegen oder auch an dieser befestigt sein beispielsweise durch Klemm-, Haft- oder Schraubverbindungen.

Die Befestigungseinrichtung kann dazu ausgelegt sein, an ihrem einen Ende an einem fixen Gegenstand wie z.B. einem Möbel befestigt zu werden. An ihrem anderen Ende kann das Gelenk angeordnet sein, dass die Befestigungseinrichtung schwenkbar mit der Halteeinrichtung verbindet.

Sowohl an der Halteeinrichtung wie auch an der Befestigungseinrichtung sind jeweils mindestens ein entsprechendes Ansatzstück vorgesehen. Die Ansatzstücke können integral mit den jeweiligen Einrichtungen oder als separate, an den jeweiligen Einrichtungen befestigte Teile ausgebildet sein. Sowohl die Halteeinrichtung und die Befestigungseinrichtung als auch die jeweiligen Ansatzstücke können einstückig oder aus mehreren Teilstücken aufgebaut sein.

In dem Halteeinrichtungsansatzstück und dem Befestigungseinrichtungsansatzstück kann jeweils eine vorzugsweise durchgehende Bohrung vorgesehen sein. Im zusammengebauten Zustand können die Bohrungen der verschiedenen Ansatzstücke miteinander ausgerichtet sein und die Schwenkachse kann sich durch sie hindurch erstrecken.

Die Schwenkachse kann ein beliebiges Element sein, das dazu geeignet ist, das Halteeinrichtungsansatzstück und das Befestigungseinrichtungsansatzstück derart miteinander zu verbinden, dass diese relativ zueinander um die Schwenkachse herum verschwenkbar sind. Beispielsweise kann die Schwenkachse als Schraube ausgebildet sein. In einem der Ansatzstücke kann ein entsprechendes Gewinde ausgebildet sein oder es kann eine passende Mutter aufgeschraubt werden. Auf diese Weise kann mit Hilfe der Schraube das Halteeinrichtungsansatzstück gegen das Befestigungseinrichtungsansatzstück vorgespannt werden. Die Stärke der Vorspannung kann mit der Schraube eingestellt werden. Bei Verwendung einer Schraube als Schwenkachse ist das Gelenk besonders einfach montierbar und demontierbar.

Alternativ kann die Schwenkachse auch als einfacher Bolzen ausgebildet sein, der lediglich dazu dient, dass das Halteeinrichtungsansatzstück und das Befestigungseinrichtungsansatzstück zusammen- und ausgerichtet gehalten werden.

Alternativ kann die Schwenkachse auch integral mit einem der Ansatzstücke ausgebildet sein.

Die in dem Halteeinrichtungsansatzstück vorgesehene Feststelleinrichtung weist einen Vorsprung auf. Dieser Vorsprung kann seitlich, d.h. in einer Richtung parallel zur Schwenkachse, über eine Seitenbegrenzungsfläche des Halteeinrichtungsansatzstücks ragen. Er ist parallel zur Schwenkachse verlagerbar, wird aber durch ein elastisches Element wie beispielsweise eine Feder oder ein Elastomer seitlich nach außen, d.h. in Richtung hin zu dem Befestigungseinrichtungsansatzstück, vorgespannt. Das heißt, im Normalfall, wenn keine weiteren Kräfte von außen auf das Gelenk wirken, ragt der Vorsprung in Richtung des Befestigungseinrichtungsansatzstückes.

In dem Befestigungseinrichtungsansatzstück ist mindestens eine Ausnehmung vorgesehen, die in Form und Größe dazu angepasst ist, dass der Vorsprung der Feststelleinrichtung in sie eingreifen kann, d.h. sich teilweise in sie hinein erstrecken kann. Dies kann geschehen, wenn das Gelenk in einer Feststellposition ist, d.h. wenn der Vorsprung und die Ausnehmung miteinander fluchtend ausgerichtet sind. Wenn der Vorsprung in die Ausnehmung eingreift, ist das Gelenk darin gehemmt, weiter um die Schwenkachse geschwenkt zu werden. Lediglich wenn auf den Vorsprung eine Kraft ausgeübt wird, die ausreicht, ihn gegen die Federkraft des elastischen Elementes zurück zu drücken, kann dieser aus dem Eingriff freikommen und das Gelenk kann weiter verschwenkt werden.

Vorzugsweise weist der Vorsprung eine konvex gekrümmte Oberfläche auf, mit der der Vorsprung in die Ausnehmung einrücken kann. Beispielsweise kann der Vorsprung als Kugel ausgebildet sein, die von einer in der Feststelleinrichtung befindlichen Feder so nach außen gegen einen ringförmigen Kragen gepresst wird, dass sie seitlich aus dem Halteeinrichtungsansatzstück vorragt. Durch die Krümmung seiner Oberfläche wird der Vorsprung gegen die Federkraft zurück geschoben, wenn eine ausreichende Schwenkkraft auf das Gelenk ausgeübt wird. Der Vorsprung kann dadurch aus der Ausnehmung freikommen und das Gelenk kann weiter verschwenkt werden.

Gemäß einer Ausführungsform können in dem Halteeinrichtungsansatzstück eine Mehrzahl von Feststelleinrichtungen vorgesehen sein. Alternativ oder ergänzend können in dem Befestigungseinrichtungsansatzstück mehrere Ausnehmungen vorgesehen sein. Es ist damit möglich, mehrere Feststellpositionen für das Gelenk zu definieren. Außerdem ist es möglich, die Kraft, die nötig ist, um das Gelenk aus einer Feststellposition heraus zu bewegen, nicht nur durch die Federkraft des elastischen Elementes sondern auch durch die Anzahl der vorgesehenen Feststelleinrichtungen zu beeinflussen.

Vorzugsweise sind die mehreren Feststelleinrichtungen bzw. die mehreren Ausnehmungen entlang eines Kreises mit der Schwenkachse als Zentrum angeordnet. Mit anderen Worten können die Feststelleinrichtungen bzw. die Ausnehmungen um die Schwenkachse herum in einem gleichen radialen Abstand angeordnet sein. Beim Verschwenken des Gelenkes rutschen die Vorsprünge der Feststelleinrichtungen alternierend in die Ausnehmungen ein, wobei ein einzelner oder auch mehrere Vorsprünge gleichzeitig im Eingriff stehen können.

Optional können die Feststelleinrichtungen und/oder die Ausnehmungen entlang des Kreises äquidistant angeordnet sein. Dadurch kann erreicht werden, dass sich die Feststellpositionen des Gelenkes in gleichen Winkelabständen befinden.

Wenn mehrere Feststelleinrichtungen und mehrere Ausnehmungen vorhanden sind, können diese auch so angeordnet sein, dass jeweils ein Vorsprung einer Feststelleinrichtung in eine Ausnehmung eingreift während ein anderer Vorsprung einer anderen Feststelleinrichtung knapp neben einer Aussparung liegt. Auf diese Weise können eng benachbarte Feststellpositionen erreicht werden.

In einer weiteren Ausführungsform sind ein erstes und ein zweites Befestigungseinrichtungsansatzstück vorgesehen. Das Halteeinrichtungsansatzstück ist dabei zwischen den beiden Befestigungseinrichtungsansatzstücken angeordnet. In dem Halteeinrichtungsansatzstück ist mindestens eine erste Feststelleinrichtung vorgesehen, bei der ein verlagerbarer Vorsprung in Richtung auf das erste Befestigungseinrichtungsansatzstück hin vorgespannt ist. Ferner ist in dem Halteeinrichtungsansatzstück mindestens eine zweite Feststelleinrichtung vorgesehen, bei der ein verlagerbarer Vorsprung in Richtung auf das zweite Befestigungseinrichtungsansatzstück hin vorgespannt ist. Das erste Befestigungselementansatzstück weist dabei mindestens eine Ausnehmung auf, die derart ausgebildet ist, dass der Vorsprung der ersten Feststelleinrichtung in die Ausnehmung eingreift, wenn das Gelenk in einer ersten Feststellposition ist. Das zweite Befestigungselementansatzstück weist mindestens eine Ausnehmung auf, die derart ausgebildet ist, dass der Vorsprung der zweiten Feststelleinrichtung in diese Ausnehmung eingreift, wenn das Gelenk in einer zweiten Feststellposition ist. In dieser Ausführungsform kann das Gelenk eine gewisse Symmetrie in Bezug auf eine Ebene normal zur Schwenkachse aufweisen, wodurch eine Kraftverteilung innerhalb des Gelenkes symmetrisch ausgebildet werden kann.

Die erste und die zweite Feststellposition können identisch oder an verschiedenen Verschwenkpositionen des Gelenks sein. Die Ausnehmungen in dem ersten und dem zweiten Befestigungselementansatzstück und die erste und die zweite Feststelleinrichtung können so angeordnet sein, dass eine erste und eine zweite Feststellposition um einen kleinen Winkel gegeneinander versetzt sind.

In den obigen Ausführungen wurde angegeben, dass die Feststelleinrichtung in dem Halteeinrichtungsansatzstück vorgesehen ist, wohingegen die entsprechende Ausnehmung in dem Befestigungseinrichtungsansatzstück ausgebildet ist. Dem Fachmann ist jedoch klar, dass die Anordnung auch umgekehrt erfolgen kann, d.h. die Feststelleinrichtung kann in dem Befestigungseinrichtungsansatzstück und die Ausnehmung in dem Halteeinrichtungsansatzstück vorgesehen sein. Beide Möglichkeiten sind als äquivalent anzusehen, da lediglich die Zuordnung der Begriffe "Befestigungseinrichtungsansatzstück" und "Halteeinrichtungsansatzstück" vertauscht werden müssen.

Bei dem beschriebenen Terminalständer wird eine Feststellposition in vorteilhafter Weise nicht oder zumindest nicht ausschließlich durch Reibung zwischen dem Halteeinrichtungsansatzstück und dem Befestigungseinrichtungsansatzstück gehalten, sondern das Gelenk kann in mehreren vorgegebenen Feststellpositionen durch formschlüssigen Eingriff der Vorsprünge der Feststelleinrichtung(en) in die Ausnehmung(en) in den Befestigungseinrichtungsansatzstücken gehalten werden. Das Gelenk rastet dabei lösbar in die einzelnen Feststellpositionen ein und ist daher stufig verstellbar. Dadurch, dass das Halten der Feststellpositionen nicht allein auf Reibung beruht, ist das Gelenk weitgehend unanfällig gegen Verschleiß.

In einer weiteren Ausführungsform weist die Befestigungsvorrichtung zwei Elemente auf, die durch ein Drehgelenk miteinander verbunden sind, so dass die beiden Befestigungsvorrichtungselemente um eine Drehachse, die quer zu der Schwenkachse ausgerichtet ist, relativ zueinander gedreht werden können. Der Ständer bietet damit auch die Möglichkeit eines Verdrehens, um die Position der Halteeinrichtung anzupassen.

Alle hier beschriebenen Merkmale und Eigenschaften des erfindungsgemäßen Terminalständers sind beliebig untereinander kombinierbar. Außerdem soll die Verwendung z.B. der Artikel "ein" oder "der" in Bezug auf einen Gegenstand nicht ausschließen, dass alternativ auch mehrere solche Gegenstände vorgesehen sein können.

Die beschriebenen und weitere Vorteile und Merkmale der Erfindung werden aus der nachfolgenden Beschreibung einer bevorzugten Ausführungsform zusammen mit den begleitenden Zeichnungen ersichtlich, wobei:
Fig. 1 eine Explosionsansicht eines Terminalständers gemäß einer Ausführungsform der vorliegenden Erfindung zeigt;
Fig. 2 eine perspektivische Ansicht eines Gelenks eines Terminalständers gemäß einer Ausführungsform der vorliegenden Erfindung im demontierten Zustand zeigt; und
Fig. 3 eine Seitenansicht eines Gelenks eines Terminalständers gemäß einer Ausführungsform der vorliegenden Erfindung im montierten Zustand zeigt.

In den Figuren bezeichnen gleiche Bezugszeichen gleiche oder ähnliche Bauelemente des dargestellten Terminalständers.

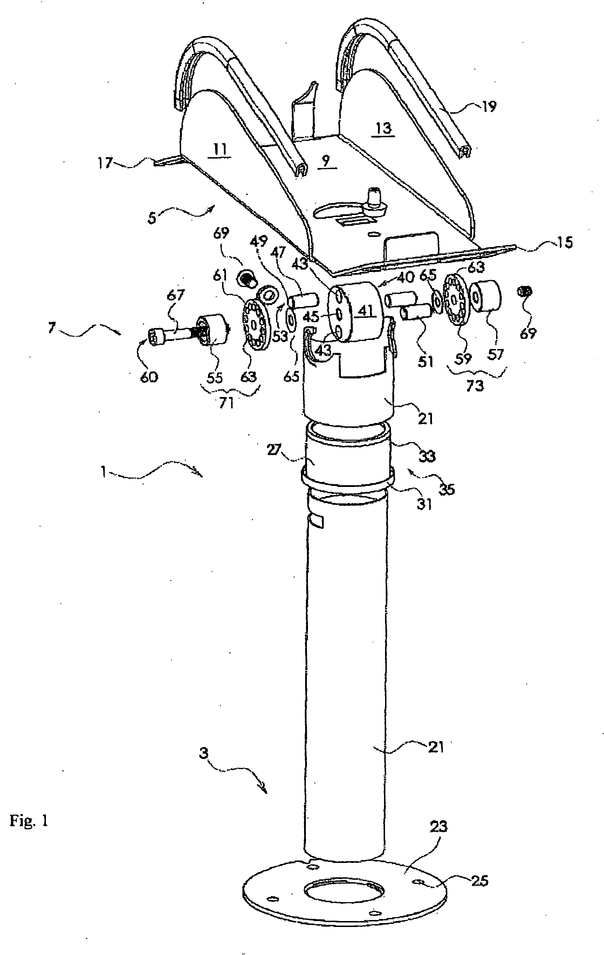

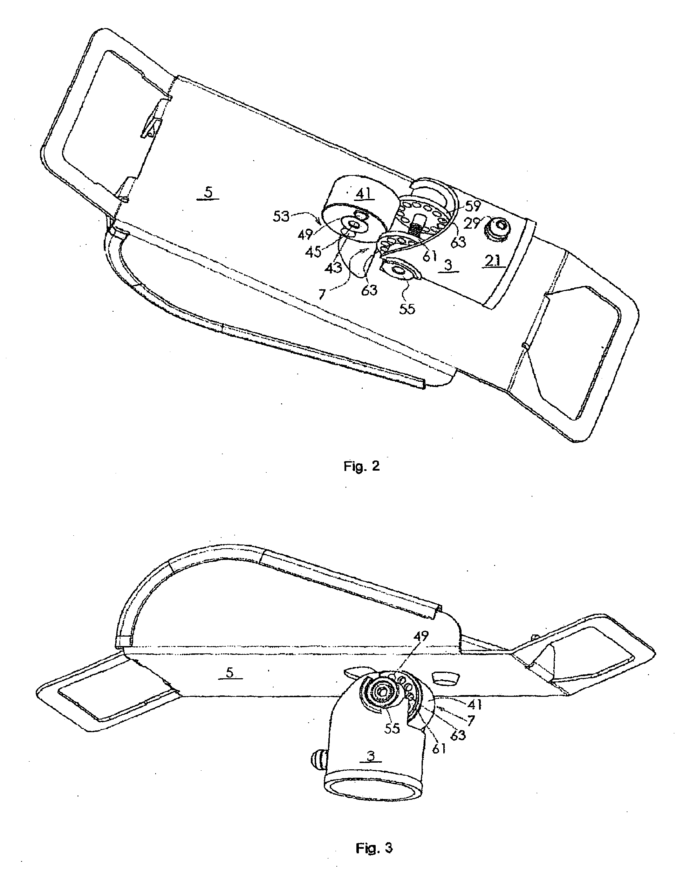

In Fig. 1 ist ein erfindungsgemäßer Terminalständer in Explosionsansicht dargestellt. Einzelne Elemente des Ständers sind separat gezeichnet, obwohl sie im zusammengebauten Zustand miteinander verbunden oder sogar miteinander verschweißt sein können. In Fig. 2 ist das Gelenk des erfindungsgemäßen Terminalständers dargestellt, wobei die Halteeinrichtung zu Klarheitszwecken demontiert von der Befestigungseinrichtung gezeigt ist. In Fig. 3 ist das Gelenk im zusammengebauten Zustand gezeigt.

Die Hauptbestandteile des Terminalständers 1 sind die Befestigungseinrichtung 3, die Halteeinrichtung 5 und das Gelenk 7.

Die Halteeinrichtung 5 weist eine Platte 9 mit zwei seitlichen Flanken 11, 13 und einem vorderen und einem hinteren Griff 15, 17 auf. Die Flanken sind durch Stoßleisten 19 geschützt. Die Halteeinrichtung 5 ist so ausgebildet, dass auf ihr ein Bezahlterminal angeordnet und optional mit ihr verschraubt werden kann.

Die Befestigungseinrichtung 3 weist ein Rundrohr 21 und einen mit dem Rundrohr verbundenen Flansch 23 auf. In dem Flansch sind Bohrlöcher 25 vorgesehen, über die der Flansch an einem Gegenstand festgeschraubt werden kann.

Das Rohr 21 ist zweiteilig ausgeführt. Ein Kunststoffring 27 ist zwischen einem oberen und einem unteren Teil des Rohres 21 angeordnet und wirkt als Drehgelenk 35. Der Kunststoffring 27 ist mit zwei konzentrischen Krägen 31, 33 (einer auf der einen Seite außen, einer auf der anderen Seite innen) so ausgeführt, dass er über die volle Umfangsfläche auf dem unteren Standrohr aufliegt bzw. das obere Standrohrteil über die volle Umfangsfläche aufliegt. Damit ist eine sichere und dauerhafte Übertragung der Gewichtslast von der Terminal-Halteeinrichtung auf das Standrohr gewährleistet. Folglich ist diese Konstruktion quasi verschleißfrei.

Das Gelenk 7 besteht aus einem als Ansatzstück 40 ausgebildeten Zylinder 41, der eine zentrale Durchbohrung 45 entlang seiner Längsachse und weitere seitlich versetzte Durchbohrungen 43 parallel zu seiner Längsachse aufweist. Dieser Zylinder 41 ist geeignet an die Terminal-Halterplatte 9 angeschweißt. In die seitlich versetzten Durchbohrungen 43 werden von beiden Seiten Elemente 47 mit federnd gelagerter Kugel 49 eingesetzt, die als Feststelleinrichtung 51 dienen, wobei die Kugel 49 als Vorsprung 53 über die seitliche Randfläche des Zylinders 41 hervorragt. Die Anzahl der verwendeten Elemente 47 mit federnd gelagerter Kugel bestimmt die Festigkeit der Anordnung bzw. die Kraft, die aufzuwenden ist, um die Haltereinrichtung 5 z.B. mit dem Griff 15, 17 von Feststellposition zu Feststellposition zu bewegen.

Die Aufnahme für den Zylinder 41 wird unter anderem von dem passend zugeschnittenen Rohr 21 der Befestigungseinrichtung 3 gebildet. In dieses Rohr 21 sind symmetrisch zwei kleine durchgebohrte Zylinder 55, 57 angeschweißt, von denen einer mit einem Gewinde versehen ist. An diese kleinen Zylinder 55, 57 sind in paralleler Anordnung Lochscheiben 59, 61 angeschweißt. Die Gesamtheit aus einem kleinem Zylinder 55, 57 und einer daran angeschweißten Lochscheibe 59, 61 dient jeweils als Befestigungseinrichtungsansatzstück 71, 73. Die Anordnung der Ausnehmungen 63 in den Lochscheiben 59, 61 ist so gewählt, dass ihre Position derjenigen der Feststelleinrichtungen 51 im Zylinder 41 mit den federnd gelagerten Kugelelementen 47 entsprechen kann.

Die Anordnung der Lochscheiben 59, 61 kann auch versetzt erfolgen, um so eine höhere Anzahl von Stufungen (Feststellpositionen) zu erreichen. Ebenso ist es möglich, nur auf einer Seite eine Lochscheibe 59 zu verwenden und die (das) Element(e) 47 mit federnd gelagerter Kugel nur auf einer Seite einzusetzen.

Zur Montage wird der Zylinder 41 an der Terminal-Halterplatte 9 zwischen die Lochscheiben 59, 61 so geschoben, dass die federnd gelagerten Kugelelemente 47 in die Ausnehmungen 63 der Lochscheiben 59, 61 hineingedrückt werden. Zwei Messingscheiben 65 auf jeder Seite sorgen für quasi geräuschlose Bewegung.
Zur Fixierung des Gelenks 7 wird eine als Schwenkachse 66 dienende Schraube 67 durch die ganze Anordnung geschoben und in den kleinen Zylinder 57 mit dem Gewinde hineingedreht. Die Schraube 67 wird nur so stark angezogen, dass die gesamte Anordnung nicht klemmt bzw. leichtgängig ist. Gesichert gegen Loslösung wird die Schraube 67 durch einen Splint oder Konterschraube 69.

In der hier vorliegenden Konstruktion des Terminalständers wird quasi ohne Reibung gearbeitet und alle erforderlichen Teile sind beweglich gelagert. Lediglich die Lochscheibe erfährt auf Dauer durch das federnd gelagerte Kugelelement eine leichte Abnutzungsspur.

In einem nicht beschränkend auszulegenden Versuch, die Erfindung zusammenfassend zu beschreiben, kann diese derart beschrieben werden: Es wird ein Terminalständer 1 vorgeschlagen, bei dem eine Halteeinrichtung 5 über ein Gelenk 7 relativ zu einer Befestigungseinrichtung 3 verschwenkt werden kann, wobei Feststelleinrichtungen 51, die in einem Ansatzstück 40 an der Halteeinrichtung 5 angeordnet sind, elastisch federnd in Ausnehmungen 63 in einem an der Befestigungseinrichtung 3 angebrachten Ansatzstück 71, 73 eingreifen und so das Gelenk 7 in vorbestimmten Feststellpositionen fixieren.

## Patentansprüche

1. Terminalständer (1), aufweisend:
eine Halteeinrichtung (5);
eine Befestigungseinrichtung (3); und
ein Gelenk (7);
wobei das Gelenk (7) aufweist:
ein an der Halteeinrichtung (5) befestigtes Halteeinrichtungsansatzstück (40);
ein an der Befestigungseinrichtung (3) befestigtes Befestigungseinrichtungsansatzstück (55, 57);
wobei sich durch das Halteeinrichtungsansatzstück (41) und das Befestigungseinrichtungsansatzstück (71, 73) eine Schwenkachse (66) erstreckt, um die das Halteeinrichtungsansatzstück (41) relativ zu dem Befestigungseinrichtungsansatzstück (71, 73) schwenkbar ist;
wobei in dem Halteeinrichtungsansatzstück (41) mindestens eine Feststelleinrichtung (51) vorgesehen ist, bei der ein parallel zu der Schwenkachse (66) verlagerbarer Vorsprung (53) durch ein elastisches Element in Richtung auf das Befestigungseinrichtungsansatzstück (71, 73) vorgespannt ist;
wobei das Befestigungseinrichtungsansatzstück (71, 73) mindestens eine Ausnehmung (63) aufweist, die derart ausgebildet ist, dass der Vorsprung (53) der Feststelleinrichtung (51) in die Ausnehmung (63) eingreift, wenn das Gelenk (7) in einer Feststellposition ist.

2. Terminalständer nach Anspruch 1, wobei in dem Halteeinrichtungsansatzstück (40) mehrere Feststelleinrichtungen (51) vorgesehen sind.

3. Terminalständer nach Anspruch 2, wobei die Feststelleinrichtungen (51) entlang eines Kreises mit der Schwenkachse (66) als Zentrum angeordnet sind.

4. Terminalständer nach Anspruch 3, wobei die Feststelleinrichtungen (51) entlang des Kreises äquidistant angeordnet sind.

5. Terminalständer nach einem der Ansprüche 1 bis 4, wobei das Befestigungseinrichtungsansatzstück (71, 73) mehrere Ausnehmungen (63) aufweist, die derart ausgebildet sind, dass ein Vorsprung (53) mindestens einer Feststelleinrichtung (51) in mindestens eine der Ausnehmungen (63) eingreift, wenn das Gelenk (7) in einer Feststellposition ist.

6. Terminalständer nach Anspruch 5, wobei die Ausnehmungen (63) entlang eines Kreises mit der Schwenkachse (66) als Zentrum angeordnet sind.

7. Terminalständer nach Anspruch 6, wobei die Ausnehmungen (63) entlang des Kreises äquidistant angeordnet sind.

8. Terminalständer nach einem der Ansprüche 1 bis 7, wobei ein erstes und ein zweites Befestigungseinrichtungsansatzstück (71, 73) vorgesehen sind,
wobei das Halteeinrichtungsansatzstück (40) zwischen den beiden Befestigungseinrichtungsansatzstücken (71, 73) angeordnet ist,
wobei in dem Halteeinrichtungsansatzstück (40) mindestens eine erste Feststelleinrichtung (51) vorgesehen ist, bei der ein verlagerbarer Vorsprung (53) in Richtung auf das erste Befestigungseinrichtungsansatzstück (71) vorgespannt ist;
wobei in dem Halteeinrichtungsansatzstück (40) mindestens eine zweite Feststelleinrichtung (51) vorgesehen ist, bei der ein verlagerbarer Vorsprung (53) in Richtung auf das zweite Befestigungseinrichtungsansatzstück (73) vorgespannt ist;
wobei das erste Befestigungselementansatzstück (71) mindestens eine Ausnehmung (63) aufweist, die derart ausgebildet ist, dass der Vorsprung der ersten Feststelleinrichtung (51) in die Ausnehmung (63) eingreift, wenn das Gelenk (7) in einer ersten Feststellposition ist; und
wobei das zweite Befestigungselementansatzstück (73) mindestens eine Ausnehmung (63) aufweist, die derart ausgebildet ist, dass der Vorsprung (53) der zweiten Feststelleinrichtung (51) in die Ausnehmung (63) eingreift, wenn das Gelenk (7) in einer zweiten Feststellposition ist.

9. Terminalständer nach Anspruch 8, wobei die Ausnehmungen (63) in dem ersten und dem zweiten Befestigungselementansatzstück (71, 73) und die erste und die zweite Feststelleinrichtung (51) so angeordnet sind, dass die erste und die zweite Feststellposition um einen Winkel gegeneinander versetzt sind.

10. Terminalständer nach einem der Ansprüche 1 bis 9, wobei ein verlagerbarer Vorsprung der Feststelleinrichtung (51) eine konvex gekrümmt Oberfläche aufweist.

11. Terminalständer nach einem der Ansprüche 1 bis 10, wobei die Feststelleinrichtung (51) eine Kugel (49) aufweist, die durch eine Feder parallel zu der Schwenkachse (67) in Richtung auf das Befestigungselementansatzstück (71, 73) gedrückt wird.

12. Terminalständer nach einem der Ansprüche 1 bis 11, wobei die Befestigungseinrichtung (3) zwei Elemente (21) aufweist, die durch ein Drehgelenk (35) miteinander verbunden sind, so dass die beiden Befestigungsvorrichtungselemente (21) um eine Drehachse, die quer zu der Schwenkachse ist, relativ zueinander gedreht werden können.
